# EUROPÄISCHE PATENTSCHRIFT

(11) **EP 0 980 784 B1**
(45) Veröffentlichungstag und Bekanntmachung des Hinweises auf die Patenterteilung: **22.10.2003**
(21) Anmeldenummer: 99111913.2
(22) Anmeldetag: 21.06.1999
(51) Int. Cl.: B60N 2/06

(54) **Kraftfahrzeugsitz mit einem Verstellmechanismus**
Automotive vehicle seat with adjusting mechanism
Siège de véhicule automobile à mécanisme de réglage

(30) Priorität: 17.08.1998 DE 29814626 U
(43) Veröffentlichungstag der Anmeldung: 23.02.2000
(73) Patentinhaber: C. Rob. Hammerstein GmbH & Co.KG, 42699 Solingen (DE)
(72) Erfinder: Frohnhaus, Ernst-Reiner, 42653 Solingen (DE); Becker, Burckhard, 42655 Solingen (DE); Lingner, Michael, 40468 Düsseldorf (DE)
(74) Vertreter: Bauer, Wulf, Dr.

(56) Entgegenhaltungen:
- DE-A- 3 146 289
- DE-A- 3 819 345

## Beschreibung

Die Erfindung bezieht sich auf einen Kraftfahrzeugsitz mit einem Verstellmechanismus, z.B. einer Höhenverstellung des Sitzbereichs oder einer Längsverstellung einer Längsführung, wobei der Verstellmechanismus einen Elektromotor, ein Untersetzungsgetriebe und eine Verstelleinrichtung aufweist, die ein erstes Verstellelement sowie ein zweites, relativ zum ersten Verstellelement. verstellbares,zweites Verstellelement mit einer Bremse aufweist (siehe z.B. DE-A-38 19 345).

Kraftfahrzeugsitze mit einem oder mehreren Verstellmechanismen gehören heute zum allgemeinen Stand der Technik, sie ermöglichen eine ergonomische Einstellung des Fahrzeugsitzes und tragen damit zur Sicherheit bei, sie sind gegenüber mechanischen Verstellmechanismen insbesondere bequemer und mit weniger Kraftaufwand einstellbar ist, sind also insoweit bequemer zu benutzen.

Bei diesen Verstellmechanismen tritt jedoch allgemein ein Problem auf. Bei normalen Betriebszuständen des Kraftfahrzeugs, seien es nun positive oder negative Beschleunigungen in Fahrtrichtung oder quer dazu und durch Belastungen, kommt es zu Kräften, die zwischen den beiden Verstellelementen wirken und diese gegeneinander zu verstellen trachten. Dies führt zumindest zu kleinen Relativbewegungen zwischen den beiden Verstellelementen, damit zu einem mehr oder weniger für den Benutzer spürbaren, kleinen Ruck, insbesondere aber zu einem Geräusch, beispielsweise einem Klicken. Die Erfindung hat sich das Ziel gesetzt, hier eine Abhilfe zu schaffen.

Im allgemeinen sind die Schienenpaare einer Längsverstellvorrichtung für die Längsverstellung des Kraftfahrzeugsitzes geneigt gegenüber der Horizontalen angeordnet. Schon beim Belasten eines Kraftfahrzeugsitzes durch einen Passagier treten Relativkräfte zwischen den beiden Verstellelementen auf, in diesem Fall also den Sitzschienen und den Bodenschienen der Längsverstellvorrichtung. Aber auch im Fahrbetrieb, beispielsweise beim Abbremsen oder Durchfahren einer Kurve, kommt es zu Kräften, die die beiden Verstellelemente gegeneinander zu bewegen trachten.

Ähnliche Probleme gibt es auch bei anderen Verstellmechanismen eines Kraftfahrzeugsitzes, beispielsweise einer Sitzhöhenverstellung, einer Neigungsverstellung der Rückenlehne usw.. Auch hier treten schon bei normalen Fahrbedingungen Relativkräfte auf, ebenso beim Belasten des Sitzes durch einen Passagier, beim Durchfahren eines Schlagloches usw..

Unter einer Verstelleinrichtung mit einem ersten und einem zweiten Verstellelement wird folgendes verstanden: Die beiden Verstellelemente sind mechanisch gegeneinander geführt, beispielsweise miteinander gelenkverbunden oder gegeneinander längsverschiebbar und haben zudem Antriebsteile, wie beispielsweise ein Ritzel, das zum ersten Verstellelement gehört, und eine Zahnstange, die zum zweiten Verstellelement gehört, oder aber in gleicher Weise eine Spindel und eine Spindelmutter usw.. Die Verstelleinrichtung umfaßt somit sowohl die mechanisch gegeneinander zu verstellenden Teile als auch die Antriebselemente für diese mechanische Verstellung.

Hiervon ausgehend hat es sich die Erfindung zur Aufgabe gemacht, den Verstellmechanismus der eingangs genannten Art dahingehend weiterzubilden, dass im normalen Betriebszustand des Kraftfahrzeugs anfallende Relativkräfte zwischen den beiden Verstellelementen sich möglichst nicht bemerkbar machen, weder in einer Relativbewegung zwischen den beiden Verstellelementen noch akustisch.

Unter einem normalen Betriebszustand des Kraftfahrzeugs werden dabei alle diejenigen Zustände verstanden, die unterhalb von unfallbedingten Beschleunigungen liegen, bei denen also z.B. die Elektronik eines Airbags und eine sonstige Sicherheitselektronik, die bei Unfallzuständen anspricht, noch nicht ausgelöst wird.

Erfindungsgemäß wird die Aufgabe dadurch gelöst, dass sich die Bremse des Verstellmechanismus) ständig im Eingriff befindet und dass die Bremse in beiden Drehrichtungen des Elektromotors ein Bremsmoment bewirkt, das so bemessen ist, dass es deutlich geringer ist als das aktive Antriebsmoment des Elektromotors an ihrer Stelle, aber größer ist als die passiven Drehmomente, die im normalen Betriebszustand des Kraftfahrzeugs durch Beschleunigungen aller Art und Belastungen auftreten.

Erfindungsgemäß ist also eine Bremse vorgesehen, die ein so hohes Bremsmoment auf eine Welle des Verstellmechanismus einleitet, dass alle im normalen Betriebszustand anfallenden Kräfte zwischen den beiden Verstellelementen zu Drehmomenten an derselben Welle führen, die geringer sind. Auf diese Weise wird also erreicht, dass passive Drehmomente, die unerwünscht anfallen und nicht vom Benutzer gewollt sind, im wesentlichen nicht zu Relativbewegungen zwischen den beiden Verstellelementen führen. Das vom Elektromotor an der Welle aufgebrachte Drehmoment ist so deutlich größer als das Bremsmoment der Bremse, dass es stets zu einer Verstellung des Verstellmechanismus kommt, wenn der Elektromotor betätigt wird.

In bevorzugter Ausbildung befindet sich die Bremse im Bereich kleiner Umdrehungszahlen, also beispielsweise zwischen dem Untersetzungsgetriebe und der Verstelleinrichtung. So arbeiten beispielsweise Längverstellvorrichtungen typischerweise mit einem motorisch angetriebenen Ritzel, das mit einer Zahnstange in Eingriff ist. Typischerweise befindet sich dann die Bremse zwischen Ritzel und Untersetzungsgetriebe.

In einer bevorzugten Ausführung ist das Bremsmoment der Bremse in beiden Drehrichtungen gleich. Dies führt einerseits zu einer einfacheren Ausbildung der Bremse, andererseits ist im praktischen Betrieb damit zu rechnen, dass die Beschleunigungen und Belastungen in allen möglichen Richtungen anfallen und demgemäß auch abgefangen werden müssen.

In einer bevorzugten Ausführung hat die Bremse einen Zaum, der als Klemmkörper wirkt und ein zylindrisches Teilstück der zu bremsenden Welle unter Freilassung eines in einer Axialebene verlaufenden Spaltes umgreift. Durch ein elastisches Mittel wird dieser Zaum so vorbelastet, dass der Spalt zusammengedrückt wird. Zwischen dem zylindrischen Teilstück der zu bremsenden Welle und dem Zaum sind zwei Flächen in Kontakt, die mit Reibung aneinander liegen. Vorzugsweise ist für die Reibfläche im Zaum ein eigener Reibkörper angeordnet, dessen Innenfläche die Reibfläche des Zaums bildet.

Der Zaum hat geeignete Befestigungsmittel, um beispielsweise an einem Getriebe oder an dem mechanischen Teil der Verstelleinrichtung befestigt zu werden, in das der Antrieb eingeleitet wird. In einer bevorzugten Ausführung wird die Reibungsfläche gebildet zwischen einerseits einem Stahlrohr und andererseits einem insbesondere duroplastischen Kunststoff oder einerseits einem Aluminiumrohr und andererseits widerum einem Kunststoff, insbesondere einem Duroplasten. Die Reibungsfläche kann aber auch durch einen Magnetspalt ausgebildet sein, als sogenannte Magnetpulverbremse.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In der Zeichnung zeigen:
- FIG. 1:: eine Seitenansicht eines Verstellmechanismus für einen Kraftfahrzeugsiz, gezeigt ist ein Elektromotor mit Untersetzungsgetriebe und eine Längsführung mit ihrem Antrieb,
FIG. 2: ein Schnittbild quer zur Antriebswelle durch eine Bremse,
FIG. 3: ein Schnittbild entlang der Schnittlinie III - III in Figur 2 und
FIG. 4: eine Darstellung ähnlich Figur 3 einer Magnetpulverbremse.

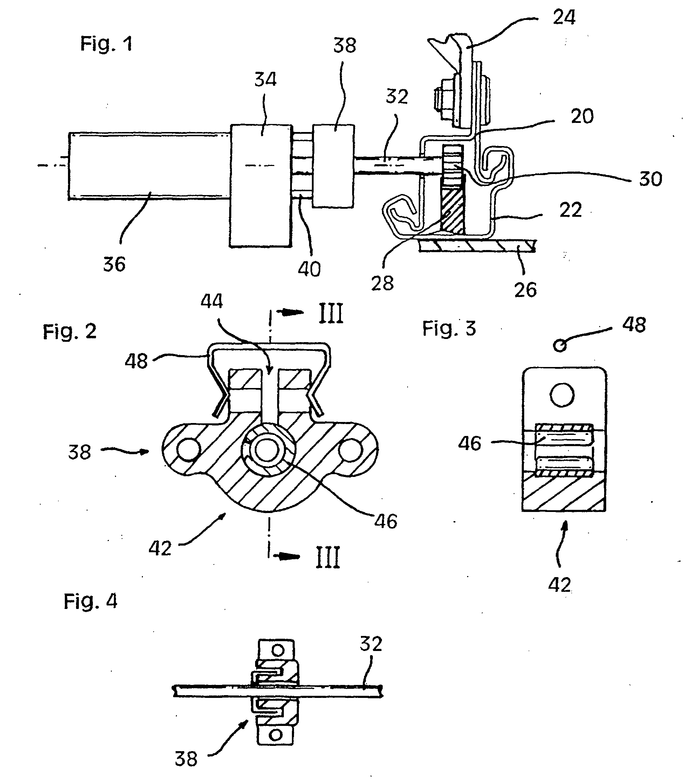

In Figur 1 ist eine Verstelleinrichtung gezeigt, wie sie für Kraftfahrzeuge in ählicher Form bekannt ist. Dargestellt sind eine Sitzschiene 20 und eine Bodenschiene 22, die in wechselseitigem Eingriff stehen. Die aus zwei Einzelprofilen zusammengesetzte Sitzschiene 20 ist eine umgriffene Schiene, sie steht über hier nicht näher dargestellte Führungsmittel, beispielsweise Kugelreihen, mit der Bodenschiene 22 in Eingriff. Die Sitzschiene 20 ist mit einem hier nicht näher dargestellten Fahrzeugsitz verbunden, der angedeutet ist durch ein Verbindungsteil 24. Er ist ansich bekannt und muß somit nicht dargestellt werden. Die Bodenschiene 22 ist mit einer Bodengruppe 26 eines zugehörigen Kraftfahrzeugs verbunden, auch derartige Befestigungen gehören zum Stand der Technik. Der Bodenschiene 22 ist eine Zahnstange 28 zugeordnet und mit ihr verbunden. In der Sitzschiene 20 ist ein Ritzel 30 drehbar gelagert, es ist in Eingriff mit der Zahnstange 28 und wird über eine Antriebswelle 32 drehangetrieben. Diese Antriebswelle 32 ist über ein Getriebe 34 mit einem Elektromotor 36 verbunden. Die bislang beschriebenen Einzelteile und Merkmale gehören zum Stand der Technik.

Zwischen Getriebe 34 und Ritzel 30 ist eine Bremse 38 eingefügt. Im konkreten Ausführungsbeispiel nach Figur 1 stützt sie sich über Verbindungsmittel 40 am Gehäuse des Getriebes 34 ab, sie kann sich ebenso aber auch beispielsweise an der Sitzschiene 20 abstützen. Eine Möglichkeit der konkreten Ausbildung dieser Bremse 38 ist aus den Figuren 2 und 3 oder aus Figur 4 ersichtlich.

Im Bereich der Bremse 38 ist nach Figur 2 und 3 die Antriebswelle 32 im wesentlichen zylindrisch, vorzugsweise vollständig zylindrisch. Sie wird von einem Zaum 42 umgriffen, der z.B. aus Kunststoff gefertigt ist und bis auf einen Spalt 44, der in einer Axialebene verläuft, die Antriebswelle 32 umgreift. Zum Zaum 42 gehört noch ein Reibkörper 46 in Form einer geschlitzten Hülse 50. Er ist, wie insbesondere aus Figur 3 hervorgeht, in einer Ausnehmung des Kunststoffkörpers des Zaumes 42 angeordnet. Dieser Reibkörper 46 ist in Kontakt mit der Oberfläche der Antriebswelle. Durch Abstimmung der Materialien einerseits der Antriebswelle 32 und andererseits des Reibkörpers 46 sowie des Drucks zwischen beiden wird die gewünschte Bremswirkung erzielt. Als günstig hat es sich herausgestellt, die Oberfläche der Antriebswelle 32 aus Stahl herzustellen, dann ist der Reibkörper 46 beispielsweise aus Tetrafluorethylen. In einer anderen Ausführung ist die Oberfläche der Antriebswelle 32 durch ein stranggezogenes Aluminiumrohr gebildet, dann hat sich als Reibkörper 46 ein Niederdruckpolyethylen besonders bewährt. Günstig als Reibkörper 46 sind auch Mischmaterialien, beispielsweise ein Niederdruckpolyethylen oder ein Tetrafluorethylen, das einerseits eine Bewehrung, beispielsweise aus Kunststofffäden, Kohlefasern, Stahlfäden oder dergleichen aufweist und in das zusätzlich noch ein Schmiermittel, beispielsweise Molybdändisulfit oder Graphit eingelagert ist.

Der eigentliche Körper des Zaums 42 ist spiegelsymmetrisch aufgebaut, die Symmetrieebene befindet sich in der Ebene des Spaltes 44. Es sind zwei Befestigungslöcher vorgesehen, mit denen das Gehäuse des Zaums 42 fixiert werden kann, beispielsweise am Gehäuse des Getriebes 34, wie Figur 1 zeigt. Der Spalt 44 wird von einer im wesentlichen U-förmigen Feder 48 umgriffen. Diese drückt die beiden Arme des Zaums 42 links und rechts des Spaltes 44 zusammen, so dass der gewünschte Druck zwischen Reibkörper 46 und Oberfläche der Antriebswelle 32 auftritt, der das erforderliche Bremsmoment bewirkt. Anstelle der Feder 48 können auch andere mechanische Mittel vorgesehen sein, um die Arme beidseits des Spaltes 44 zusammenzudrücken.

Das Gehäuse des Zaums 42 ist vorzugsweise aus Kunststoff ausgeführt, es kann aber auch aus einem anderen Material, beispielsweise Metall, hergestellt sein. Die tatsächliche konstruktive Ausbildung des Gehäuses ist beliebig.

## Patentansprüche

1. Kraftfahrzeugsitz mit einem Verstellmechanismus, z.B. einer Höhenverstellung des Sitzbereichs oder einer Längsverstellung einer Längsführung (20, 22), wobei der Verstellmechanismus einen Elektromotor (36), ein Untersetzungsgetriebe (34) und eine Verstelleinrichtung aufweist, die ein erstes Verstellelement sowie ein zweites, relativ zum ersten Verstellelement verstellbares, zweites Verstellelement mit einer Bremse (38) hat, **dadurch gekennzeichnet, dass** sich die Bremse (38) ständig im Eingriff befindet und dass die Bremse (38) in beiden Drehrichtungen des Elektromotors (36) ein Bremsmoment bewirkt, das so bemessen ist, dass es deutlich geringer ist als das aktive Antriebsmoment des Elektromotors (36), aber größer ist als die passiven Drehmomente, die im normalen Betriebszustand des Kraftfahrzeugs durch Beschleunigungen und Belastungen aller Art auftreten.

2. Kraftfahrzeugsitz nach Anspruch 1, **dadurch gekennzeichnet, dass** das Bremsmoment der Bremse (38) in beiden Drehrichtungen gleich ist.

3. Kraftfahrzeugsitz nach Anspruch 1, **dadurch gekennzeichnet, dass** die Bremse (38) zwischen dem Untersetzungsgetriebe (34) und der Verstelleinrichtung angeordnet ist.

4. Kraftfahrzeugsitz nach Anspruch 1, **dadurch gekennzeichnet, dass** die Bremse (38) einen Zaum (42) aufweist, a) der ein zylindrisches Teilstück der zu bremsenden Welle (32) unter Freilassung eines in einer Axialebene verlaufenden Spaltes (44) umgreift und b) der ein elastisches Mittel (48) aufweist, das zwischen dem Spalt (44) wirkt und diesen zusammendrückt und dass ein Reibungsbereich zwischen dem zylindrischen Teilstück und dem Zaum (42) vorgesehen ist.

5. Kraftfahrzeugsitz nach Anspruch 4, **dadurch gekennzeichnet, dass** der Reibungsbereich gebildet ist zwischen einerseits einem Stahlrohr und andererseits einem Kunststoff, vorzugsweise einem Duroplasten, insbesondere Niederdruckpolyethylen (NDPE) oder Tetrafluorethylen.

6. Kraftfahrzeugsitz nach Anspruch 4, **dadurch gekennzeichnet, dass** die Reibungsbereich gebildet wird zwischen einem nicht eloxierten, stranggezogenen Aluminiumrohr und einem Duroplasten, insbesondere Niederdruckpolyethylen (NDPE).

7. Kraftfahrzeugsitz nach Anspruch 4, **dadurch gekennzeichnet, dass** die Bremse (38) eine Magnetpulverbremse ist.

8. Kraftfahrzeugsitz nach Anspruch 1, **dadurch gekennzeichnet, dass** das Bremsmoment an der Antriebswelle (32) kleiner als 20 %, aber vorzugsweise größer als 10 %, insbesondere größer als 5 % des Antriebsmomentes des Elektromotors (36) an gleicher Stelle ist.

## Claims

1. A vehicle seat with an adjusting mechanism, for example with a height adjustment of the seat area or with a length adjustment of a longitudinal guiding (20, 22), whereas the adjusting mechanism is provided with an electromotor (36), a step-down gear (34) and an adjusting device having a first adjusting element as well as a second adjusting element with a brake (38) which second adjusting element may be adjusted relative to the first adjusting element, **characterized in that** the brake (38) is constantly engaged, that the brake (38) is leading to a braking moment in both senses of rotation of the electromotor (36), the braking moment being calculated so as to be considerably smaller than the active driving moment of the electromotor (36) but so as to be bigger than the passive torques occurring during normal operation of the vehicle due to all kinds of acceleration and loads.

2. A vehicle seat according to claim 1, **characterized in that** the braking moment of the brake (38) is the same in both senses of rotation.

3. A vehicle seat according to claim 1, **characterized in that** the brake (38) is placed between the step-down gear (34) and the adjusting device.

4. A vehicle seat according to claim 1, **characterized in that** the brake (38) has a dynamometer (42) a) encompassing, but for a slot (44) running in an axial plane, a cylindrical part of the shaft (32) to be braked and b) having a flexible means (48) acting in the slot (44) and squeezing it and that a friction area is provided between the cylindrical part and the dynamometer (42).

5. A vehicle seat according to claim 4, **characterized in that** the friction area is formed between a steel tube on one side and a synthetic material, preferably a duroplastic, more particularly low density polyethylene (LDPE) or tetrafluorethylene, on the other.

6. A vehicle seat according to claim 4, **characterized in that** the friction area is formed between a tube of non-anodized, extruded aluminium and a duroplastic, more particularly low density polyethylene (LDPE).

7. A vehicle seat according to claim 4, **characterized in that** the brake (38) is a magnetic powder particle brake.

8. A vehicle seat according to claim 1, **characterized in that** the braking moment on the motor shaft (32) is less than 20% but preferably more than 10%, particularly more than 5% of the driving moment of the electromotor (36) at the same place.

## Revendications

1. Siège de véhicule automobile avec un mécanisme de réglage, par exemple avec un mécanisme à régler la hauteur de la zone assise ou avec un mécanisme de réglage longitudinal d'un guidage longitudinal (20, 22), le mécanisme de réglage présentant un moteur électrique (36), un démultiplicateur (34) et un dispositif de réglage qui possède un premier élément de réglage ainsi qu'un deuxième élément de réglage avec un frein (38) ce deuxième élément de réglage étant réglable relativement au premier élément de réglage, **caractérisé par le fait que** le frein (38) est en prise permanente et en ce que le frein (38) provoque dans les deux sens de rotation du moteur électrique (36) un couple de freinage sur un arbre, qui est mesuré de telle manière qu'il est sensiblement plus faible que le couple actif d'entraînement du moteur électrique (36) sur cet arbre, mais plus grand que les couples passifs qui se présentent en état normal de marche du véhicule automobile par suite d'accélérations et de charges de toutes sortes.

2. Siège de véhicule automobile selon la revendication 1, **caractérisé par le fait que** le couple de freinage du frein (38) est égal dans les deux sens de rotation.

3. Siège de véhicule automobile selon la revendication 1, **caractérisé par le fait que** le frein (38) est disposé entre le démultiplicateur (34) et le dispositif de réglage.

4. Siège de véhicule automobile selon la revendication 1, **caractérisé par le fait que** le frein (38) présente une bride (42), a) qui se prend autour dune partie cylindrique de l'arbre à freiner (32) tout en laissant libre une fente (44) s'étendant dans un plan axial et b) qui présente un moyen élastique (48) qui agit entre la fente (44) et serre celle-ci, et que l'on prévoit une zone de friction entre la partie cylindrique et la bride (42).

5. Siège de véhicule automobile selon la revendication 4, **caractérisé par le fait que** la zone de friction est formée entre un tube d'acier d'un côté et une matière plastique de l'autre côté, de préférence un thermodurcissable, en particulier un polyéthylène basse pression (PEBP) ou un tétrafluoréthylène.

6. Siège de véhicule automobile selon la revendication 4, **caractérisé par le fait que** la zone de friction est formée entre un tube extrudé en aluminium non oxydé électrolytiquement et un thermodurcissable, en particulier un polyéthylène basse pression (PEBP).

7. Siège de véhicule automobile selon la revendication 4, **caractérisé par le fait que** le frein (38) est un frein à particules magnétiques.

8. Siège de véhicule automobile selon la revendication 1, **caractérisé par le fait que** le couple de freinage sur l'arbre moteur (32) est inférieur à 20 %, mais de préférence supérieur à 10 %, en particulier supérieur à 5 % du couple d'entraînement du moteur électrique (36) au même endroit.
